(19) Europäisches Patentamt
European Patent Office
Office européen des brevets

(11) **EP 2 563 629 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(21) Anmeldenummer: **10798770.3**

(22) Anmeldetag: **17.12.2010**

(51) Int Cl.:
*B60T 8/174* *(2006.01)*　*B60T 8/1761* *(2006.01)*
*B60T 8/34* *(2006.01)*　*B60T 8/40* *(2006.01)*
*B60T 13/66* *(2006.01)*　*B60T 8/1755* *(2006.01)*

(86) Internationale Anmeldenummer:
**PCT/EP2010/070011**

(87) Internationale Veröffentlichungsnummer:
**WO 2011/134552 (03.11.2011 Gazette 2011/44)**

(54) **VERFAHREN ZUM BETRIEB EINER BREMSANLAGE**

METHOD FOR OPERATING A BRAKING SYSTEM

PROCÉDÉ POUR FAIRE FONCTIONNER UN SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2010 DE 102010028279**

(43) Veröffentlichungstag der Anmeldung:
**06.03.2013 Patentblatt 2013/10**

(73) Patentinhaber: **Continental Teves AG & Co. oHG 60488 Frankfurt (DE)**

(72) Erfinder:
• BILLER, Harald
  65760 Eschborn (DE)
• BUSCHMANN, Gunther
  65510 Idstein (DE)

(56) Entgegenhaltungen:
WO-A1-03/093082　　　DE-A1- 10 060 225
DE-A1-102004 014 171　DE-A1-102004 025 638
DE-A1-102004 027 256　DE-A1-102006 040 424
DE-A1-102006 043 826　DE-A1-102008 010 704
DE-A1-102008 019 148　DE-A1-102009 033 499
US-B1- 6 494 546

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb einer Bremsanlage für Kraftfahrzeuge gemäß dem Oberbegriff von Anspruch 1. Aus der DE 10 2004 014 171 A1 sind ein derartiges Verfahren und entsprechendes System bekannt.

Aus der Patentanmeldung DE 10 2009 033 499 A1 ist eine Bremsanlage bekannt, welche einen Hauptbremszylinder, der mindestens einen Hauptbremszylinderkolben aufweist und an den Radbremskreise angeschlossen sind, eine elektrisch steuerbare Druckbereitstellungseinrichtung, eine elektronische Steuer- und Regeleinheit zur Ansteuerung der elektrisch steuerbaren Druckbereitstellungseinrichtung im Sinne einer Regelung des von ihr abgegebenen hydraulischen Druckes, sowie eine dem Hauptbremszylinder vorgeschaltete Pedalentkopplungseinheit mit einem Rückhaltekolben, dessen erste Ringfläche mit dem Hauptbremszylinderkolben eine erste hydraulische Kammer begrenzt, die von dem von der elektrisch steuerbaren Druckbereitstellungseinrichtung abgegebenen Druck beaufschlagbar ist, umfasst. Eine Druckbeaufschlagung der ersten hydraulischen Kammer bewirkt eine Kraftwirkung auf den Hauptbremszylinderkolben in Betätigungsrichtung und auf den Rückhaltekolben entgegen der Betätigungsrichtung. Die elektrisch steuerbare Druckbereitstellungseinrichtung kann als ein elektrohydraulischer Aktuator ausgebildet sein, der im Wesentlichen aus einer hydraulischen Zylinder-Kolben-Anordnung sowie einem den Kolben antreibenden Elektromotor besteht. Zusätzlich ist in der Bremsanlage ein Hochdruckspeicher vorgesehen, der unter Zwischenschaltung eines Absperrventils von der elektrisch steuerbaren Druckbereitstellungseinrichtung aufladbar ist. Um die Dynamik der Bremsanlage bei Druckaufbauvorgängen zu erhöhen, insbesondere bei hoch dynamischen Bremsvorgängen, wird in der DE 10 2009 033 499 A1 gleichzeitig mit der Aktivierung der elektrisch steuerbaren Druckbereitstellungseinrichtung das Absperrventil des Hochdruckspeichers in seine offene Schaltstellung umgeschaltet, so dass die erste hydraulische Kammer zusätzlich zu dem von der Druckbereitstellungseinrichtung zur Verfügung gestellten Druckmittelmenge mit dem im Hochdruckspeicher unter hohem Druck stehenden Druckmittel beaufschlagt wird. Dieser Vorgang hat einen schnellen Druckaufbau in der ersten Kammer und somit im Hauptbremszylinder und den Radbremsen zur Folge. Bei diesem in der DE 10 2009 033 499 A1 beschriebenen Verfahren des Zuschaltens des Hochdruckspeichers wird also das Absperrventil zeitgleich mit der Aktivierung der Druckbereitstellungseinrichtung geöffnet und die erste hydraulische Kammer gleichzeitig von der Druckbereitstellungseinrichtung und dem Hochdruckspeicher mit Druckmittel beaufschlagt.

Um eine möglichst kurze Druckaufbauzeit zu erreichen, sollte das Speichervolumen des Hochdruckspeichers möglichst groß sein, da die erreichbare Druckaufbauzeit von dem Speichervolumen abhängt, und zwar nimmt die minimal erreichbare Druckaufbauzeit mit kleiner werdendem Speichervolumen zu. Aufgrund der Herstellungskosten sowie dem begrenzten zur Verfügung stehenden Bauraum für den Hochdruckspeicher, ist es jedoch oftmals wünschenswert, dass Speichervolumen des Hochdruckspeichers möglichst gering zu wählen.

Der vorliegenden Erfindung liegt daher die Aufgabe zugrunde, ein Verfahren zum Betrieb einer Bremsanlage bereitzustellen, mit welchem auch bei Verwendung eines Hochdruckspeichers mit geringem Speichervolumen ein ausreichend schneller Druckaufbau erzielt werden kann.

Diese Aufgabe wird erfindungsgemäß durch ein Verfahren gemäß Anspruch 1 gelöst.

Der Erfindung liegt der Gedanke zugrunde, dass der Hochdruckspeicher lediglich zeitweise der Druckbereitstellungseinrichtung zum Druckaufbau zugeschaltet wird.

Das vorgeschlagene Verfahren bietet den Vorteil, dass aus Gründen der Kostenersparnis und/oder des geringen zur Verfügung stehenden Bauraums ein Hochdruckspeicher mit eher geringem Volumen verwendet werden kann, ohne dass signifikante Einbußen bezüglich der Schnelligkeit eines Druckaufbaus in der Bremsanlage hingenommen werden müssen.

Gemäß einer bevorzugten Ausführungsform wird der Hochdruckspeicher geregelt zu- und wieder abgeschaltet.

Besonders bevorzugt erfolgt die Zu- bzw. Abschaltung des Hochdruckspeichers in Abhängigkeit einer von einer Sensoreinrichtung zum Erfassen des Fahrerverzögerungswunsches erfassten Betätigung eines Bremspedals durch den Fahrzeugführer und/oder in Abhängigkeit eines von einer Sensoreinrichtung erfassten Druckes und/oder in Abhängigkeit eines von einer Sensoreinrichtung erfassten Kolbenweges der Bremsanlage.

Bevorzugt ist der Hochdruckspeicher von der elektrisch steuerbaren Druckbereitstellungseinrichtung aufladbar. Zum Laden des Hochdruckspeichers wird vorteilhafterweise das zwischen der elektrisch steuerbaren Druckbereitstellungseinrichtung und dem Hochdruckspeicher vorgesehene Absperrventil geöffnet und die Druckbereitstellungseinrichtung im Sinne einer Druckerzeugung aktiviert.

Das Absperrventil ist bevorzugt als ein elektromagnetisch betätigbares 2/2-Wegeventil ausgebildet.

Gemäß einer bevorzugten Ausführungsform der Erfindung werden die Radbremsen indirekt, z.B. über einen Hauptbremszylinder, mittels der Druckbereitstellungseinrichtung bzw. mittels Druckbereitstellungseinrichtung und Hochdruckspeicher mit Druckmittel beaufschlagt. Dies kann z.B. durch Druckbeaufschlagung einer hydraulischen Kammer, wie in der DE 10 2009 033 499 A1 beschrieben, erfolgen. Es ist jedoch auch bevorzugt, dass die Radbremsen direkt mittels der Druckbereitstellungseinrichtung bzw. mittels Druckbereitstellungseinrichtung und Hochdruckspeicher mit Druckmittel beaufschlagt werden.

Zwischen der Druckbereitstellungseinrichtung und den Radbremsen bzw. zwischen dem Hauptbremszylinder und den Radbremsen ist bevorzugt ein hydraulisches Bremsdruckmodulationsaggregat eingefügt, welches bremskreisindividuelle oder radselektive Bremsvorgänge ermöglicht.

Ebenso ist es bevorzugt, dass der Hochdruckspeicher einen Speicherdruck von ca. 90 bis 110 bar besitzt.

Gemäß einer bevorzugten Ausführungsform des erfindungsgemäßen Verfahrens wird der Hochdruckspeicher nicht zugeschaltet, wenn sich die Bremsanlage in einer Schlupfregelung, z.B. Antiblockierregelung (ABS-Regelung), oder Fahrdynamik-Regelung, z. B. ESC-Regelung (ESC: electronic stability control), befindet.

Bevorzugt umfasst die Bremsanlage ein Bremspedal sowie eine Sensoreinrichtung zum Erfassen eines Fahrerverzögerungswunsches. Dieses Sensorsignal wird dann bevorzugt zur Zu- bzw. Wiederabschaltung des Hochdruckspeichers herangezogen. So kann z.B. eine Panikbremsung erkannt werden und durch zeitweise Zuschaltung des Hochdruckspeichers ein schnellerer Druckaufbau erzielt werden.

Ebenso ist es bevorzugt, dass die Bremsanlage einen Hauptbremszylinder umfasst, der mindestens einen Hauptzylinderkolben aufweist und an den Radbremskreise angeschlossen sind, wobei der Hauptbremszylinder, und damit die Radbremsen, durch die Druckbereitstellungseinrichtung betätigbar ist.

Zur Erfassung des Druckes in einem der Druckräume des Hauptbremszylinders und/oder des von der elektrisch steuerbaren Druckbereitstellungseinrichtung gelieferten Druckes und/oder zumindest eines der Radbremsdrücke sind bevorzugt Drucksensoren in der Bremsanlage vorgesehen. Zumindest eines dieser Sensorsignale wird dann bevorzugt zur Zu- bzw. Wiederabschaltung des Hochdruckspeichers ausgewertet. So kann z.B. der Hochdruckspeicher wieder abgeschaltet werden, wenn die Reibbeläge der Radbremsen bei Erreichen eines Radbremsdruckschwellenwertes als sicher angelegt gelten.

Bevorzugt ist die hydraulische Bremsanlage sowohl vom Fahrzeugführer als auch unabhängig vom Fahrzeugführer ansteuerbar.

Weitere bevorzugte Ausführungsformen der Erfindung ergeben sich aus den Unteransprüchen und der nachfolgenden Beschreibung anhand von Figuren.

Es zeigen:

Fig. 1 eine schematische Darstellung eines Ausführungsbeispiels einer Bremsanlage zur Durchführung eines erfindungsgemäßen Verfahrens,

Fig. 2 ein Zeitdiagramm zur Veranschaulichung eines ersten Ausführungsbeispiels eines erfindungsgemäßen Verfahrens,

Fig. 3 ein Zeitdiagramm zur Veranschaulichung eines zweiten Ausführungsbeispiels eines erfindungsgemäßen Verfahrens, und

Fig. 4 beispielsgemäße zeitliche Verläufe eines im Hochdruckspeicher befindlichen Druckmittelvolumens und eines erzielte Druckes.

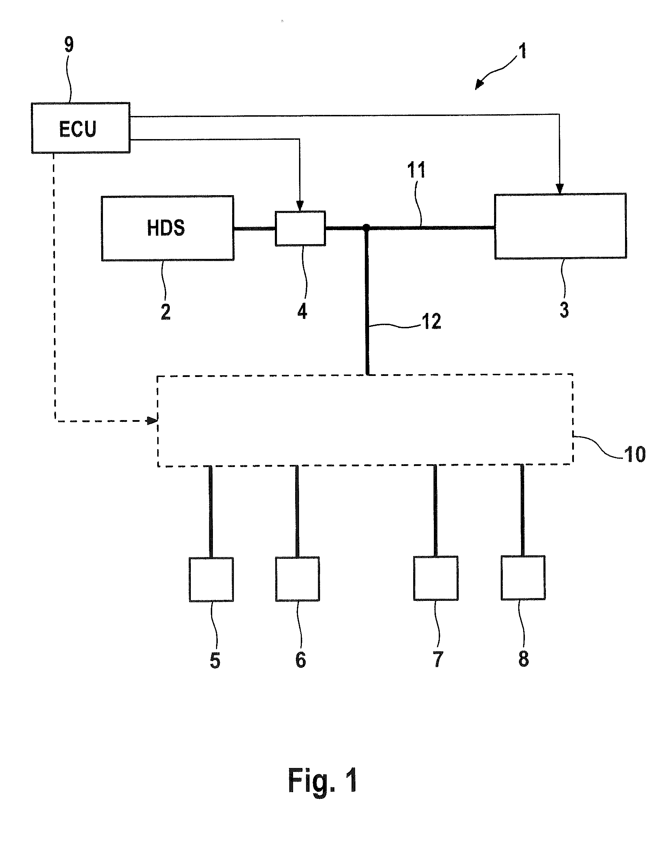

Das in Fig. 1 stark vereinfacht und schematisch dargestellte Ausführungsbeispiel einer Bremsanlage 1 zur Durchführung eines erfindungsgemäßen Verfahrens umfasst eine elektrisch steuerbare Druckbereitstellungseinrichtung 3, einen Hochdruckspeicher 2 (HDS) sowie ein elektrisch steuerbares Absperrventil 4, mittels welchem eine hydraulische Verbindung 11 zwischen Druckbereitstellungseinrichtung 3 und Hochdruckspeicher 2 hergestellt bzw. unterbrochen werden kann. Absperrventil 4 kann z.B. als ein elektromagnetisch betätigbares, stromlos geschlossenes 2/2-Wegeventil ausgeführt sein. Druckbereitstellungseinrichtung 3 und Hochdruckspeicher 2 sind über eine hydraulische Verbindung 12 mit Radbremsen 5, 6, 7, 8 der Bremsanlage 1 verbunden, so dass die Radbremsen 5, 6, 7, 8 mittels der Druckbereitstellungseinrichtung 3 und/oder des Hochdruckspeichers 2 mit Druckmittel beaufschlagbar sind.

Die Radbremsen 5, 6, 7, 8 können entweder direkt oder über eine hydraulische Anordnung 10 indirekt von der Druckbereitstellungseinrichtung 3 bzw. dem Hochdruckspeicher 2 mit Druckmittel beaufschlagt werden. Zur Verdeutlichung ist in Fig. 1 die optionale hydraulische Anordnung 10 gestrichelt dargestellt.

Die hydraulische Anordnung 10 kann z.B. einen Hauptbremszylinder bzw. Tandemhauptzylinder umfassen, dessen/deren Hauptbremszylinderkolben von dem von der elektrisch steuerbaren Druckbereitstellungseinrichtung 3 (und ggf. dem Hochdruckspeicher 2) abgegebenen Druck betätigbar ist/sind. An den Druckraum des Hauptbremszylinders bzw. an die Druckräume des Tandemhauptbremszylinders sind dann Radbremskreise angeschlossen, die (ggf. unter Zwischenschaltung eines steuerbaren Radbremsdruckmodulationsmoduls, siehe unten) die Radbremsen 5-8 der Bremsanlage 1 mit hydraulischem Druckmittel versorgen.

Zusätzlich oder alternativ kann die hydraulische Anordnung 10 ein Radbremsdruckmodulationsmodul umfassen. Das Radbremsdruckmodulationsmodul weist den Radbremsen 5-8 vorgeschaltete Druckmodulationsventile auf, die beispielsweise ABS-und/oder ESC-Bremsregelungen (ABS: Anti-Blockier-System, ESC: electronic stability control) ermöglichen. Dabei sind für die Durchführung von ABS-Regelungen acht und für die Durchführung von ESC-Regelungen zwölf Druckmodulationsventile üblich. Alternativ kann auch ein wesentlich einfacheres Radbremsdruckmodulationsmodul mit vier Druckmodulationsventilen verwendet werden, das eine Radbremsdruckmodulation nach dem sog. Multiplexprinzip ermöglicht, das dem Fachmann bekannt ist.

Bremsanlage 1 umfasst weiterhin eine elektronische Steuer- und Regeleinheit 9 (ECU). Steuer- und Regeleinheit 9 steuert die elektrisch steuerbare Druckbereitstellungseinrichtung 3 und/oder das elektrisch steuerbare Absperrventil 4 im Sinne einer Regelung des von der Druckbereitstellungseinrichtung 3 und dem Hochdruckspeicher 2, z.B. in Leitung 12, bereitgestellten hydraulischen Druckes an. Im Falle einer hydraulischen Anordnung 10 können die Komponenten der hydraulischen Anordnung 10 (z.B. die Druckmodulationsventile) ebenfalls von der Steuer- und Regeleinheit 9 angesteuert werden, um z.B. eine bremskreisindividuelle oder radselektive Bremsdruckmodulation durchzuführen.

Die elektrisch steuerbare Druckbereitstellungseinrichtung 3 ist als ein elektrohydraulischer Aktuator ausgebildet, der im Wesentlichen aus einer hydraulischen Zylinder-Kolben-Anordnung sowie einem den Kolben der Anordnung, vorzugsweise unter Zwischenschaltung eines sogenannten Rotations-Translations-Getriebes, antreibenden Elektromotor besteht. Der Betätigungsweg des Kolbens bzw. die Winkellage des Rotors des Elektromotors kann durch einen Weg- oder Lagesensor erfasst werden.

Wenn Hochdruckspeicher 2 durch die Druckbereitstellungseinrichtung 3 aufgeladen werden soll, werden die hydraulischen Verbindungen zu den Radbremsen 5-8, z.B. durch im Raddruckmodulationsmodul enthaltenen Trennventile, abgesperrt und das Absperrventil 4 geöffnet, so dass das von der Druckbereitstellungseinrichtung 3 verdrängte Druckmittelvolumen den Hochdruckspeicher 2 auflädt. Der von der Druckbereitstellungseinrichtung 3 bereit gestellte Druck wird z.B. durch einen Drucksensor überwacht.

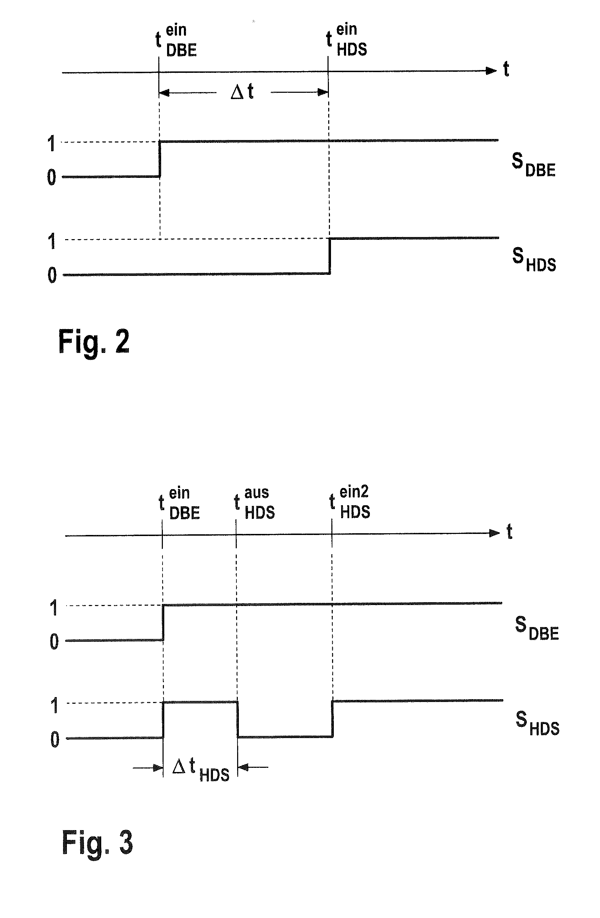

In Fig. 2 und 3 sind zwei Zeitdiagramm zur Veranschaulichung eines ersten bzw. zweiten Ausführungsbeispiels eines erfindungsgemäßen Verfahrens schematisch dargestellt. Hierzu ist ein Zeitstrahl (Pfeil) abgebildet, auf welchem Zeitpunkte markiert sind, und unterhalb des Zeitstrahls sind jeweils ein Ansteuersignal für die Druckbereitstellungseinrichtung 3 ($S_{DBE}$) und das Absperrventil 4 des Hochdruckspeichers 2 ($S_{HDS}$) schematisch dargestellt. Dabei entspricht ein Signalpegel $S_{DBE}$ für die Druckbereitstellungseinrichtung 3 von "0" einer nicht-aktivierten Druckbereitstellungseinrichtung 3 und ein Signalpegel $S_{DBE}$ von "1" einer aktivierten Druckbereitstellungseinrichtung 3, d.h. mittels des von dem Elektromotor angetriebenen Kolbens der Druckbereitstellungseinrichtung 3 wird Druckmittelvolumen aus dem Zylinder der Druckbereitstellungseinrichtung 3 verdrängt, strömt in die hydraulischen Leitungen 11 und 12 und führt so zu einem Druckaufbau. Ein Signalpegel $S_{HDS}$ von "0" bedeutet, dass das Absperrventil 4 geschlossen ist und somit der Hochdruckspeicher 2 nicht zugeschaltet ist, ein Signalpegel $S_{HDS}$ von "1" bedeutet, dass das Absperrventil 4 geöffnet ist und der Hochdruckspeicher 2 somit zugeschaltet ist.

Im Falle einer Anforderung zur Durchführung eines Bremsvorgangs, z.B. bei einer Betätigung des Bremspedals durch den Fahrzeugführer, welche z.B. anhand eines Erscheinens eines Signals am Ausgang eines den Fahrerverzögerungswunsch erfassenden Weg- oder Drehwinkelsensors erkannt wird, oder bei einer Bremsanforderung durch ein Fahrerassistenzsystem, wird zur Durchführung eines Druckaufbaus an den Radbremsen 5-8 die Druckbereitstellungseinrichtung 3 von der Steuer- und Regeleinheit 9 angesteuert und aktiviert. Entsprechend ändert sich der Signalpegel $S_{DBE}$ zum Zeitpunkt $t^{ein}_{DBE}$ der Aktivierung von "0" auf "1", wie auch in Fig. 2 und 3 dargestellt ist.

Gemäß dem in Fig. 2 veranschaulichten ersten Ausführungsbeispiel wird der Hochdruckspeicher 2 erst nach Verstreichen einer Zeitdauer $\Delta t$ nach der Aktivierung der Druckbereitstellungseinrichtung 3 zugeschaltet. Entsprechend ändert sich der Signalpegel $S_{HDS}$ zu einem Zeitpunkt $t^{ein}_{HDS}$ von "0" auf "1", wobei gilt

$$t^{ein}_{HDS} = t^{ein}_{DBE} + \Delta t.$$

Es hat sich gezeigt, dass für einen Hochdruckspeicher 2 mit einem vorgegebenen geringen Speichervolumen eine kürzere Druckaufbauzeit erreicht werden kann, wenn der Hochdruckspeicher 2 mit einer gewissen Verzögerung (Zeitdauer $\Delta t$) gegenüber dem Start des Elektromotors der Druckbereitstellungseinrichtung 3 zugeschaltet wird, als wenn der Druckaufbau von Anfang an (ab Zeitpunkt $t^{ein}_{DBE}$) gleichzeitig von der Druckbereitstellungseinrichtung 3 und dem Hochdruckspeicher 2 durchgeführt wird (also gemäß $t^{ein}_{HDS} = t^{ein}_{DBE}$). So ist es möglich, das Speichervolumen des Hochdruckspeichers 2 zu verringern und dennoch durch eine geeignete zeitversetzte Zuschaltung des Hochdruckspeichers 2 eine ausreichende kurze Druckaufbauzeit zu erreichen.

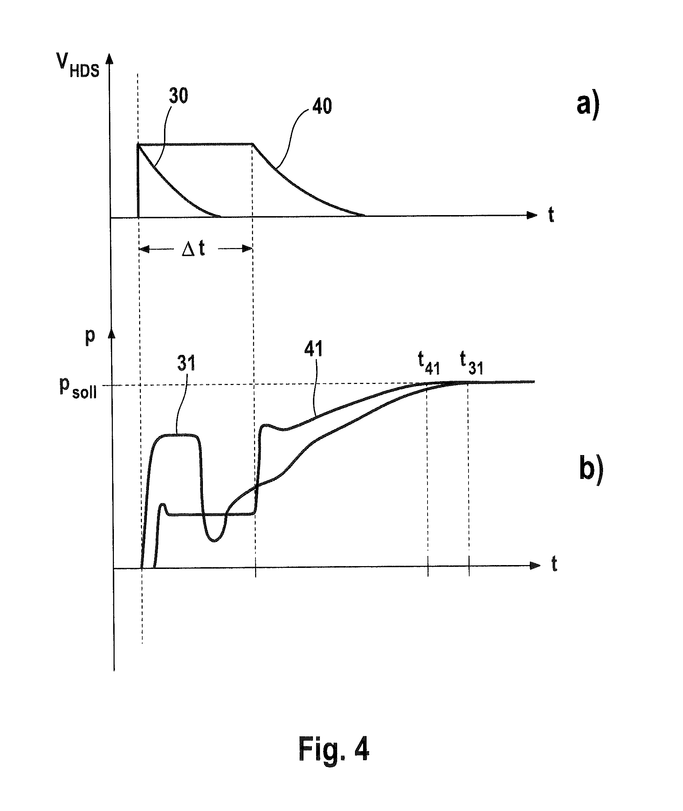

Dieser Vergleich ist in Fig. 4 schematisch dargestellt. Im oberen Diagramm Fig. 4 a) ist das im Hochdruckspeicher befindliche Druckmittelvolumen über der Zeit t dargestellt. Der Verlauf 30 entspricht dem Fall, dass Druckbereitstellungseinrichtung 3 und Hochdruckspeicher 2 gleichzeitig ab demselben Zeitpunkt $t^{ein}_{DBE}$ aktiviert bzw. zugeschaltet werden. Der Verlauf 40 entspricht dem Fall, dass der Hochdruckspeicher 2 erst nach der Zeit $\Delta t$ zugeschaltet wird (entsprechend Fig. 2). Im unteren Diagramm Fig. 4 b) ist der Druck p in Leitung 11 bzw. 12 über der Zeit t dargestellt. Der Verlauf 31 entspricht dem Fall, dass Druckbereitstellungseinrichtung 3 und Hochdruckspeicher 2 gleichzeitig ab demselben Zeitpunkt $t^{ein}_{DBE}$ aktiviert bzw. zugeschaltet werden. Der Verlauf 41 entspricht dem Fall, dass der Hochdruckspeicher 2 erst nach der Zeit $\Delta t$ zugeschaltet wird (entsprechend Fig. 2). Das zeitversetzte Zuschalten des Hochdruckspeichers 2 führt dazu, dass der Solldruck $p_{Soll}$ zu einem früheren Zeitpunkt $t_{41}$ erreicht wird als dieser Druck $p_{Soll}$ im Falle des gleichzeitigen Druckaufbaus durch Druckbereitstellungseinrichtung 3 und Hochdruckspeicher 2 erreicht wird (Zeitpunkt $t_{31}$).

Die optimale Verzögerungszeitdauer $\Delta t$, welche zu einer minimalen Druckaufbauzeit führt, hängt von dem Speichervolumen, dem Speicherdruck und auch dem Solldruck ab. Beispielsgemäß besitzt der Hochdruckspeicher einen Speicherdruck von ca. 90 bis 110 bar. Das Speichervolumen beträgt ca. 2 bis 5 cm$^3$.

In einem vereinfachten Ausführungsbeispiel wird eine Verzögerungszeitdauer $\Delta t$ fest vorgegeben, da Speichervolumen und Speicherdruck gemäß Auslegung der Bremsanlage vorgegeben sind.

Gemäß dem in Fig. 3 veranschaulichten zweiten Ausführungsbeispiel wird der Hochdruckspeicher 2 zeitgleich mit der Aktivierung der Druckbereitstellungseinrichtung 3 zugeschaltet, d.h. $t^{ein}_{HDS} = t^{ein}_{DBE}$. Entsprechend ändern sich auch der Signalpegel $S_{HDS}$ zum Zeitpunkt $t^{ein}_{DBE}$ von "0" auf "1". Nach einer Zeitdauer $\Delta t_{HDS}$ wird der Hochdruckspeicher 2 wieder abgeschaltet (Zeitpunkt $t^{aus}_{HDS}$ mit $t^{aus}_{HDS} = t^{ein}_{DBE} + \Delta t_{HDS}$). Zu einem späteren Zeitpunkt $t^{ein2}_{HDS}$ kann der Hochdruckspeicher dann wieder zugeschaltet werden.

Die Zeitpunkte des Zuschaltens $t^{ein}_{HDS}$, $t^{ein2}_{HDS}$ bzw. Wiederabschaltens $t^{aus}_{HDS}$ des Hochdruckspeichers 2 werden beispielsgemäß in Abhängigkeit von Drücken oder Kolbenpositionen der Bremsanlage 1 gewählt, d.h. es wird eine geregelte Zuschaltung des Hochdruckspeichers in Abhängigkeit des Zustandes der Bremsanlage oder des Bremswunsches durchgeführt.

Beispielsgemäß wird die Zeitdauer $\Delta t_{HDS}$, nach welcher der Hochdruckspeicher 2 wieder abgeschaltet wird, und somit der Zeitpunkt $t^{aus}_{HDS}$ in Abhängigkeit des Radbremsdruckes an einer oder aller Radbremsen oder in Abhängigkeit des Vordruckes des Hauptbremszylinders gewählt. So wird der Hochdruckspeicher 2 beispielsgemäß wieder abgeschaltet, wenn dieser Druck einen vorgegebenen Schwellenwert (z.B. 10 bar) erreicht hat, bei welchem z.B. sicher gestellt ist, dass die Bremsbeläge an der Bremsscheibe anliegen. So wird am Anfang des Bremsvorgangs das Anlegen der Bremsbeläge durch den Hochdruckspeicher unterstützt, der Hochdruckspeicher wird bei Erreichung eines vorgegebenen Anlegedrucks in den Radbremsen (z.B. 10 bar) wieder abgeschaltet und bleibt für eine gewisse Zeit abgeschaltet, um dann wieder zugeschaltet zu werden.

Der Zeitpunkt eines Zuschaltens $t^{ein}_{HDS}$, $t^{ein2}_{HDS}$ des Hochdruckspeichers 2 kann alternativ oder zusätzlich auch in Abhängigkeit der Betätigung des Bremspedals, z.B. der Bremspedalbetätigungsgeschwindigkeit, gewählt werden. Diese kann mittels eines den Fahrerverzögerungswunsch erfassenden Weg- oder Drehwinkelsensors ermittelt werden. Aus einer schnellen Betätigung des Bremspedals kann man auf eine Notbremsung schließen, so dass im Sinne einer Notbremsassistenzfunktion ein schnelles Anlegen der Bremsbeläge und/oder ein möglichst schneller Druckaufbau gewünscht ist. Entsprechend wird beispielsgemäß ein geregeltes, zeitweises Zuschalten des Hochdruckspeichers 2 durchgeführt.

Beispielsgemäß wird der Hochdruckspeicher nicht zugeschaltet, wenn sich die Bremsanlage in einer Schlupfregelung, z.B. Antiblockierregelung (ABS-Regelung), oder Fahrdynamik-Regelung, z.B. ESC-Regelung (ESC: electronic stability control), befindet, da in solchen Situationen, wenn z.B. der Blockierdruck niedrig ist, ein Zuschalten des Hochdruckspeichers nicht notwendig ist.

**Patentansprüche**

1. Verfahren zum Betrieb einer hydraulischen Bremsanlage (1) für Kraftfahrzeuge mit einer elektrisch steuerbaren Druckbereitstellungseinrichtung (3), welche als eine hydraulische Zylinder-Kolben-Anordnung ausgebildet ist, deren Kolben mittels eines Elektromotors antreibbar ist, einem Hochdruckspeicher (2), welcher über eine hydraulische Verbindung (11), in welcher ein elektrisch steuerbares Absperrventil (4) angeordnet ist, mit der Druckbereitstellungseinrichtung (3) verbindbar ist, Radbremsen (5, 6, 7, 8), welche mittels der Druckbereitstellungseinrichtung (3) und/oder des Hochdruckspeichers (2) mit Druckmittel beaufschlagbar sind, und einer elektronischen Steuer- und Regeleinheit (9) zur Ansteuerung der elektrisch steuerbaren Druckbereitstellungseinrichtung (3) und/oder des elektrisch steuerbaren Absperrventils (4) im Sinne einer Regelung des von Druckbereitstellungseinrichtung (3) und Hochdruckspeicher (2) bereitgestellten hydraulischen Druckes, **dadurch gekennzeichnet, dass** bei einer Durchführung eines Druckaufbaus durch Aktivieren der Druckbereitstellungseinrichtung (3) lediglich zeitweise der Hochdruckspeicher (2) durch ein zumindest teilweises Öffnen des Absperrventils (4) zugeschaltet wird.

2. Verfahren nach Anspruch 1, **dadurch gekennzeichnet, dass** der Hochdruckspeicher (2) nach einer vorgegebenen Zeitdauer ($\Delta t$) nach einem Zeitpunkt ($t^{ein}_{DBE}$) des Aktivieren der Druckbereitstellungseinrichtung (3) zugeschaltet wird.

3. Verfahren nach Anspruch 1, **dadurch gekennzeichnet, dass** der Hochdruckspeicher (2) geregelt zu- und wieder abgeschaltet wird.

4. Verfahren nach einem der vorhergehenden Ansprüche, **dadurch gekennzeichnet, dass** ein Zeitpunkt des Zuschaltens ($t^{ein}_{HDS}$) oder Wiederabschaltens ($t^{aus}_{HDS}$) des Hochdruckspeichers (2) in Abhängigkeit einer von einer Sensoreinrichtung zum Erfassen des Fahrerverzögerungswunsches erfassten Betätigung eines Bremspedals durch den Fahrzeugführer durchgeführt wird.

5. Verfahren nach Anspruch 4, **dadurch gekennzeichnet, dass** ein Zeitpunkt des Zuschaltens ($t^{ein}_{HDS}$) oder Wiederabschaltens ($t^{aus}_{HDS}$) des Hochdruckspeichers (2) in Abhängigkeit einer Betätigungsgeschwindigkeit des Bremspedals durchgeführt wird.

6. Verfahren nach einem der vorhergehenden Ansprüche, **dadurch gekennzeichnet, dass** ein Zeitpunkt des Zuschaltens ($t^{ein}_{HDS}$) oder Wiederabschaltens ($t^{aus}_{HDS}$) des Hochdruckspeichers (2) in Abhängigkeit eines von einer Sensoreinrichtung erfassten Druckes, insbesondere eines Radbremsdruckes oder eines Hauptbremszylinderdruckes, und/oder in Abhängigkeit eines von einer Sensoreinrichtung erfassten Kolbenweges der Bremsanlage (1) durchgeführt wird.

7. Verfahren nach Anspruch 6, **dadurch gekennzeichnet, dass** der Hochdruckspeicher (2) wieder abgeschaltet wird ($t^{aus}_{HDS}$), wenn der Druck, insbesondere Radbremsdruck, einen vorgegebenen Druckschwellenwert erreicht.

8. Verfahren nach einem der Ansprüche 6 oder 7, **dadurch gekennzeichnet, dass** der Hochdruckspeicher (2) mit dem Zeitpunkt ($t^{ein}_{DBE}$) des Aktivieren der Druckbereitstellungseinrichtung (3) zugeschaltet wird und zu einem Zeitpunkt ($t^{aus}_{HDS}$) durch Schließen des Absperrventils (4) wieder abgetrennt wird, wenn ein Druck, insbesondere Radbremsdruck, einen vorgegebenen Druckschwellenwert erreicht.

9. Verfahren nach einem der Ansprüche 1 bis 7, **dadurch gekennzeichnet, dass** der Hochdruckspeicher (2) mit dem Zeitpunkt ($t^{ein}_{DBE}$) des Aktivieren der Druckbereitstellungseinrichtung (3) zugeschaltet wird und nach einer vorgegebenen oder bestimmten Zeitdauer ($\Delta t_{HDS}$) durch Schließen des Absperrventils (4) wieder abgetrennt wird.

10. Verfahren nach einem der vorhergehenden Ansprüche, **dadurch gekennzeichnet, dass** der Druckaufbau entsprechend der von einer Sensoreinrichtung zum Erfassen des Fahrerverzögerungswunsches erfassten Betätigung des Bremspedals stattfindet.

11. Verfahren nach einem der vorhergehenden Ansprüche, **dadurch gekennzeichnet, dass** der Hochdruckspeicher (2) nicht zugeschaltet wird, wenn der Druckaufbau von einem Assistenzsystem, insbesondere Schlupfregelsystem oder Fahrdynamik-Regelsystem, angefordert wird.

12. Bremsanlage (1) für Kraftfahrzeuge mit

    • einer elektrisch steuerbaren Druckbereitstellungseinrichtung (3), welche als eine hydraulische Zylinder-Kolben-Anordnung ausgebildet ist, deren Kolben mittels eines Elektromotors antreibbar ist,
    • einem Hochdruckspeicher (2), welcher über eine hydraulische Verbindung (11), in welcher ein elektrisch steuerbares Absperrventil (4) angeordnet ist, mit der Druckbereitstellungseinrichtung (3) verbindbar ist,
    • Radbremsen (5, 6, 7, 8) welche mittels der Druckbereitstellungseinrichtung (3) und/oder des Hochdruckspeichers (2) mit Druckmittel beaufschlagbar sind, und
    • einer elektronischen Steuer- und Regeleinheit (9) zur Ansteuerung der elektrisch steuerbaren Druckbereitstellungseinrichtung (3) und/oder des elektrisch steuerbaren Absperrventils (4) im Sinne einer Regelung des von Druckbereitstellungseinrichtung (3) und Hochdruckspeicher (2) bereitgestellten hydraulischen Druckes, **dadurch gekennzeichnet, dass**
    in der elektronischen Steuer- und Regeleinheit (9) ein Verfahren gemäß einem der Ansprüche 1 bis 11 durchgeführt wird.

**Claims**

1. Method for operating a hydraulic braking system (1) for motor vehicles with an electrically controllable pressure provision device (3), which is designed as a hydraulic cylinder/piston arrangement, the piston of which can be driven by means of an electric motor, a high-pressure accumulator (2), which can be connected to the pressure provision device (3) via a hydraulic connection (11), in which an electrically controllable shutoff valve (4) is arranged, wheel brakes (5, 6, 7, 8), which can be supplied with pressure medium by means of the pressure provision device (3) and/or the high-pressure accumulator (2), and an electronic control and regulating unit (9) for actuating the electrically controllable pressure provision device (3) and/or the electrically controllable shutoff valve (4) so as to regulate the hydraulic pressure which is provided by the pressure provision device (3) and the high-pressure accumulator (2), **characterized in that**, if a pressure buildup is carried out by activation of the pressure provision device (3), the high-pressure accumulator (2) is connected only temporarily by at least partial opening of the shutoff valve (4).

2. Method according to Claim 1, **characterized in that** the high-pressure accumulator (2) is connected after a predetermined time period ($\Delta t$) after a time ($t^{ein}_{DBE}$) of activation of the pressure provision device (3).

3. Method according to Claim 1, **characterized in that** the high-pressure accumulator (2) is connected and disconnected again in a regulated manner.

**4.** Method according to one of the preceding claims, **characterized in that** a time at which the high-pressure accumulator (2) is connected ($t^{ein}_{HDS}$) or disconnected again ($t^{aus}_{HDS}$) is implemented in accordance with an actuation of a brake pedal by the vehicle driver detected by a sensor device for detecting the driver deceleration requirement.

**5.** Method according to Claim 4, **characterized in that** a time at which the high-pressure accumulator (2) is connected ($t^{ein}_{HDS}$) or disconnected again ($t^{aus}_{HDS}$) is implemented in accordance with a speed of actuation of the brake pedal.

**6.** Method according to one of the preceding claims, **characterized in that** a time at which the high-pressure accumulator (2) is connected ($t^{ein}_{HDS}$) or disconnected again ($t^{aus}_{HDS}$) is implemented in accordance with a pressure detected by a sensor device, in particular a wheel brake pressure or a brake master cylinder pressure, and/or in accordance with a piston travel of the braking system (1) detected by a sensor device.

**7.** Method according to Claim 6, **characterized in that** the high-pressure accumulator (2) is disconnected again ($t^{aus}_{HDS}$) when the pressure, in particular the wheel brake pressure, reaches a predetermined pressure threshold value.

**8.** Method according to either of Claims 6 and 7, **characterized in that** the high-pressure accumulator (2) is connected at the time ($t^{ein}_{DBE}$) of activation of the pressure provision device (3), and is cut off again at a time ($t^{aus}_{HDS}$) by closing the shutoff valve (4) when a pressure, in particular a wheel brake pressure, reaches a predetermined pressure threshold value.

**9.** Method according to one of Claims 1 to 7, **characterized in that** the high-pressure accumulator (2) is connected at the time ($t^{ein}_{DBE}$) of activation of the pressure provision device (3), and is cut off again after a predetermined or specified time period ($\Delta T_{HDS}$) by closing the shutoff valve (4).

**10.** Method according to one of the preceding claims, **characterized in that** the pressure buildup takes place in accordance with the actuation of the brake pedal detected by a sensor device for detecting the driver deceleration requirement.

**11.** Method according to one of the preceding claims, **characterized in that** the high-pressure accumulator (2) is not connected when the pressure buildup is requested by an assistance system, in particular a slip control system or a vehicle dynamics control system.

**12.** Braking system (1) for motor vehicles with

• an electrically controllable pressure provision device (3), which is designed as a hydraulic cylinder/piston arrangement, the piston of which can be driven by means of an electric motor,
• a high-pressure accumulator (2), which can be connected to the pressure provision device (3) via a hydraulic connection (11), in which an electrically controllable shutoff valve (4) is arranged,
• wheel brakes (5, 6, 7, 8), which can be supplied with pressure medium by means of the pressure provision device (3) and/or the high-pressure accumulator (2),
• an electronic control and regulating unit (9) for actuating the electrically controllable pressure provision device (3) and/or the electrically controllable shutoff valve (4) so as to regulate the hydraulic pressure which is provided by the pressure provision device (3) and the high-pressure accumulator (2),
**characterized in that**
a method according to one of Claims 1 to 11 is carried out in the electronic control and regulating unit (9).

**Revendications**

**1.** Procédé permettant de faire fonctionner un système de freinage hydraulique (1) pour des véhicules automobiles avec un dispositif d'alimentation de pression (3) pouvant être commandé électriquement, lequel est constitué comme un montage vérin-piston hydraulique, dont le piston peut être actionné au moyen d'un moteur électrique, un accumulateur haute pression (2), lequel peut être raccordé au dispositif d'alimentation de pression (3) par un raccord hydraulique (11), dans lequel est disposée une soupape d'arrêt pouvant être commandée électriquement (4), des freins de roue (5, 6, 7, 8) qui peuvent être sollicités avec un moyen de pression au moyen du dispositif d'alimentation de pression (3) et/ou de l'accumulateur haute pression (2) et une unité de commande et de régulation électronique (9) pour piloter le dispositif d'alimentation de pression pouvant être commandé électriquement (3) et/ou la soupape d'arrêt pouvant être commandée électriquement (4) au sens d'une régulation de la pression hydraulique mise à disposition par le dispositif d'alimentation de pression (3) et l'accumulateur haute pression (2), **caractérisé en ce que** lors d'une exécution d'une montée en pression par activation du dispositif d'alimentation de pression (3), l'accumulateur haute pression (2) est connecté seulement temporairement par une ouverture au moins partielle de la soupape d'arrêt (4).

**2.** Procédé selon la revendication 1, **caractérisé en ce que** l'accumulateur haute pression (2) est, après une durée préalablement spécifiée ($\Delta t$), connecté après un moment ($t^{ein}_{DBE}$) de l'activation du dispositif d'alimentation de pression (3).

**3.** Procédé selon la revendication 1, **caractérisé en ce que** l'accumulateur haute pression (2) est, de façon réglée, connecté et à nouveau déconnecté.

**4.** Procédé selon l'une quelconque des revendications précédentes, **caractérisé en ce qu'**un moment de la connexion ($t^{ein}_{HDS}$) ou de la nouvelle déconnexion ($t^{aus}_{HDS}$) de l'accumulateur haute pression (2) est effectué par le conducteur du véhicule en fonction d'un actionnement d'une pédale de frein détecté par un dispositif de détection pour détecter le souhait de décélération du conducteur.

**5.** Procédé selon la revendication 4, **caractérisé en ce qu'**un moment de la connexion ($t^{ein}_{HDS}$) ou de la durée ($t^{aus}_{HDS}$) de l'accumulateur haute pression (2) est effectué en fonction d'une vitesse d'actionnement de la pédale de frein.

**6.** Procédé selon l'une quelconque des revendications précédentes, **caractérisé en ce qu'**un moment de la connexion ($t^{ein}_{HDS}$) ou de la durée ($t^{aus}_{HDS}$) de l'accumulateur haute pression (2) est effectué en fonction d'une pression détectée par un dispositif de détection, en particulier d'une pression de frein de roue ou d'une pression de maître-cylindre de frein, et/ou en fonction d'une course de piston du système de freinage (1) détectée par un dispositif de détection.

**7.** Procédé selon la revendication 6, **caractérisé en ce que** l'accumulateur haute pression (2) est à nouveau déconnecté ($t^{aus}_{HDS}$), si la pression, en particulier la pression de frein de roue, atteint une valeur de seuil de pression préalablement spécifiée.

**8.** Procédé selon l'une quelconque des revendications 6 ou 7, **caractérisé en ce que** l'accumulateur haute pression (2) est connecté avec le moment ($t^{ein}_{DBE}$) de l'activation du dispositif d'alimentation de pression (3) et est à nouveau séparé à un moment ($t^{aus}_{HDS}$) par fermeture de la soupape d'arrêt (4), si une pression, en particulier une pression de frein de roue, atteint une valeur de seuil de pression préalablement spécifiée.

**9.** Procédé selon l'une quelconque des revendications 1 à 7, **caractérisé en ce que** l'accumulateur haute pression (2) est connecté au moment ($t^{ein}_{DBE}$) de l'activation du dispositif d'alimentation de pression (3) et est à nouveau séparé après une durée préalablement spécifiée ou définie ($\Delta T_{HDS}$) par fermeture de la soupape d'arrêt (4).

**10.** Procédé selon l'une quelconque des revendications précédentes, **caractérisé en ce que** la montée de pression a lieu selon l'actionnement de la pédale de frein détecté par un dispositif de détection pour détecter le souhait de décélération du conducteur.

**11.** Procédé selon l'une quelconque des revendications précédentes, **caractérisé en ce que** l'accumulateur haute pression (2) n'est pas connecté, si la montée de pression est demandée par un système d'assistance, en particulier un système antipatinage ou un système de contrôle de la dynamique de trajectoire.

**12.** Système de freinage (1) pour véhicules automobiles avec

• un dispositif d'alimentation de pression pouvant être commandé électriquement (3), lequel est constitué comme un montage vérin-piston hydraulique, dont le piston peut être actionné au moyen d'un moteur électrique,
• un accumulateur haute pression (2), lequel peut être raccordé au dispositif d'alimentation de pression (3) par un raccord hydraulique (11), dans lequel est disposée une soupape d'arrêt pouvant être commandée électriquement (4),
• des freins de roue (5, 6, 7, 8) qui peuvent être sollicités avec un moyen de pression au moyen du dispositif d'alimentation de pression (3) et/ou de l'accumulateur haute pression (2), et
• une unité de commande et de régulation électronique (9) pour piloter le dispositif d'alimentation de pression pouvant être commandé électriquement (3) et/ou la soupape d'arrêt pouvant être commandée électriquement (4) au sens d'une régulation de la pression hydraulique mise à disposition par le dispositif d'alimentation de pression (3) et l'accumulateur haute pression (2),
**caractérisé en ce que**
dans l'unité de commande et de régulation électronique (9) est exécuté un procédé conformément à l'une des revendications 1 à 11.

Fig. 1

$t_{DBE}^{ein}$       $t_{HDS}^{ein}$

$\Delta t$

1

0

$S_{DBE}$

1

0

$S_{HDS}$

t

## Fig. 2

$t_{DBE}^{ein}$    $t_{HDS}^{aus}$    $t_{HDS}^{ein2}$

t

1

0

$S_{DBE}$

1

0

$S_{HDS}$

$\Delta t_{HDS}$

## Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004014171 A1
- DE 102009033499 A1